# EUROPÄISCHE PATENTSCHRIFT

(11) **EP 3 677 019 B1**
(45) Veröffentlichungstag und Bekanntmachung des Hinweises auf die Patenterteilung: **13.07.2022**
(21) Anmeldenummer: 18765553.5
(22) Anmeldetag: 07.08.2018
(51) Int. Cl.: H04N 5/235, B60R 1/00

(54) **VERFAHREN UND VORRICHTUNG ZUR VORHERSEHBAREN BELICHTUNGSSTEUERUNG ZUMINDEST EINER ERSTEN FAHRZEUGKAMERA**
METHOD AND DEVICE FOR PREDICTABLE EXPOSURE CONTROL OF AT LEAST ONE FIRST VEHICLE CAMERA
PROCÉDÉ ET DISPOSITIF DE COMMANDE PRÉVISIBLE D'EXPOSITION D'AU MOINS UNE PREMIÈRE CAMÉRA DE VÉHICULE

(30) Priorität: 01.09.2017 DE 102017215347
(43) Veröffentlichungstag der Anmeldung: 08.07.2020
(73) Patentinhaber: Conti Temic microelectronic GmbH, 90411 Nürnberg (DE)
(72) Erfinder: FENDT, Günter Anton, 86529 Schrobenhausen (DE)
(74) Vertreter: Continental Corporation
(86) Internationale Anmeldenummer: PCT/DE2018/200074
(87) Internationale Veröffentlichungsnummer: WO 2019/042503

(56) Entgegenhaltungen:
- EP-A2- 1 763 229
- DE-A1-102012 025 580
- US-A1- 2007 285 282
- US-A1- 2008 013 789

## Beschreibung

Die Erfindung betrifft ein Verfahren zur vorhersehbaren Belichtungssteuerung zumindest einer ersten Fahrzeugkamera. Ferner betrifft die Erfindung eine Vorrichtung zur vorhersehbaren Belichtungssteuerung zumindest einer ersten Fahrzeugkamera sowie ein Fahrzeug mit einer derartigen Vorrichtung.

Bei Fahrerassistenzsystemen spielen Bilderfassungseinrichtungen, beispielsweise Kameras, eine wichtige Rolle. Die Bilderfassungseinrichtungen dienen dazu, die Fahrzeugumgebung zu erfassen und basierend auf den erfassten Bilddaten können dann die unterschiedlichen Fahrerassistenzfunktionen erfolgen. Derzeitige Bilderfassungseinrichtungen passen ihre Belichtungszeit an die Helligkeitsgegebenheiten der Umgebung an, um eine Über- bzw. Unterbelichtung zu vermeiden. Dies erfolgt insbesondere dahingehend, dass ein aktuell aufgezeichnetes Bild bzw. die erfassten Bilddaten ausgewertet werden, und je nachdem ob das Bild bzw. die Bilddaten zu hell oder zu dunkel sind, wird das nächste Bild bzw. die Bilddaten anders belichtet, insbesondere kürzer oder länger. Dies führt zu einer zeitlichen Verschiebung. Wenn sich nun die Helligkeitsgegebenheiten plötzlich ändern, weil das Fahrzeug einen Übergang von einer dunklen zu einer hellen Umgebung oder umgekehrt passiert hat, beispielsweise beim Einfahren in bzw. beim Ausfahren aus einem Tunnel, dauert es einige Zeit, bis die Kamera die Belichtungszeit an die neue bzw. veränderte Umgebung angepasst hat. Hierdurch ist die Kamera aufgrund einer Über- bzw. Unterbelichtung quasi blind. Während dieses Zustandes kann die Kamera keine zuverlässigen Bilddaten der Fahrzeugumgebung zur Verfügung stellen, was zu Funktionseinbußen führt und damit zu starken Sicherheitsdefiziten bei der Verwendung in Fahrerassistenzsystem einhergehen kann.

Aus der EP 1 763 229 A2 ist ein Fotografiesystem für eine sich bewegende Vorrichtung bekannt, bei dem mehrere Bildaufnahmeeinheiten derart angeordnet sind, dass sie Bilder in jeweils verschiedenen Richtungen aufnehmen. Jede Bildaufnahmeeinheit weist dabei eine Bildaufnahmevorrichtung, eine Signalverarbeitungseinheit zum Erzeugen eines Bildsignals und eine Bildaufnahmesteuereinheit zum Steuern der Bildaufnahmevorrichtung und der Signalverarbeitungseinheit auf. Ferner ist eine Positionserfassungseinheit zur Erfassung der gegenwärtigen Position und eine Karteninformationsspeichereinheit vorgesehen, wobei ein Umgebungszustand basierend auf der Positionsinformation und der Karteninformation fortlaufend vorhergesagt wird.

Ferner beschreibt die US 2008/013789 A1eine Vorrichtung zum Erkennen einer Fahrzeugumgebung, umfassend eine erste Bildeingabeeinheit zum Abbilden der Fahrzeugumgebung, eine Objekterkennungseinheit zur Objekterkennung durch Verarbeiten der von der ersten Bildeingabeeinheit eingegebenen Bilder und eine zweite Bildeingabeeinheit, die ein Ergebnis der Objekterkennung verwendet, um einen Parameter für die erste Bildeingabeeinheit einzustellen.

Die Erfindung liegt somit die Aufgabe zugrunde, eine Lösung für die vorbenannte Problemstellung anzugeben.

Die Aufgabe wird gelöst durch die Merkmale der unabhängigen Patentansprüche. Vorteilhafte Ausgestaltungen sind Gegenstand der abhängigen Ansprüche sowie der folgenden Beschreibung und der Figuren.

Die Erfindung betrifft, gemäß einem ersten Aspekt, ein Verfahren zur vorhersehbaren Belichtungssteuerung zumindest einer ersten Fahrzeugkamera. Das Verfahren umfasst die Schritte:
- Bereitstellen zumindest einer ersten Fahrzeugkamera, dessen Blickfeld zur Erfassung eines seitlichen, eines seitlichen, hinteren und/oder eines hinteren Umgebungsbereich eines Fahrzeugs im Wesentlichen zur Seite bzw. nach hinten gerichtet ist,
- Bereitstellen zumindest einer zweiten Fahrzeugkamera, dessen Blickfeld zur Erfassung eines äußeren vorderen Umgebungsbereich des Fahrzeugs im Wesentlichen nach vorne gerichtet ist,
- Aufnehmen von zweiten Bilddaten von dem äußeren vorderen Umgebungsbereich des Fahrzeugs mittels der zweiten Fahrzeugkamera,
- Erkennen eines Bereichs mit geänderter Helligkeit innerhalb der zweiten Bilddaten der zweiten Fahrzeugkamera,
- Bestimmen einer erforderlichen Änderung eines Belichtungswertes insbesondere basierend auf den zweiten Bilddaten, um eine Erhellung oder Verdunklung auszugleichen, welche auftritt, wenn das Fahrzeug in den Bereich mit der geänderter Helligkeit eintritt, und
- Übermitteln des geänderten Belichtungswertes an die zumindest eine erste Fahrzeugkamera, so dass beim Eintritt in den Bereich mit geänderter Helligkeit die zumindest eine erste Fahrzeugkamera erste Bilddaten basierend auf den geänderten Belichtungswerten aufnehmen kann.

Der Vorteil der vorliegenden Erfindung liegt somit insbesondere darin, dass auch bei einer Fahrzeugkamera, die im Wesentlichen ein Blickfeld aufweist, welches nicht in Fahrtrichtung des Fahrzeugs gerichtet ist, also welche nicht in den zukünftigen Umgebungsbereich weist, ein Belichtungswert, insbesondere eine Belichtungszeit bzw. eine Blendeneinstellung erlangen kann, die mit der aktuellen bzw. eintretenden Helligkeitsgegebenheit harmonisiert. Zeitliche Aussetzer der Kameras können somit verhindert werden. Eine Blindheit der Kamera kann somit vermieden werden, wodurch bei Einsatz der Kamera in Fahrerassistenzsystemen eine sehr hohe Zuverlässigkeit bzw. Stabilität gewährleistet werden kann.

Die wenigstens zweiten Bilddaten enthalten bevorzugt die äußere Umgebung des Fahrzeugs, in welcher sich das Fahrzeug potentiell fortbewegt, idealerweise ein Vorausbereich des Fahrzeugs. In dem Vorausbereich kann ein Bereich mit geänderter Helligkeit erkannt werden. Zur Erkennung von Bereichen mit geänderter Helligkeit können bekannte Methode angewandt werden.

Vorliegend kann unter geänderter Helligkeit sowohl eine Verdunklung wie auch eine Erhellung verstanden werden. Die Helligkeit kann somit sowohl abnehmen wie auch zunehmen, wodurch es bei mangelnder Anpassung des Belichtungswertes zu einer Über- bzw. Unterbelichtung kommen kann.

Eine erforderliche Änderung des Belichtungswertes kann vorliegend insbesondere durch eine Änderung der Belichtungszeit und/oder eine Anpassung der Blende erreicht werden.

Mittels der zumindest einen ersten Fahrzeugkamera lassen sich bevorzugt erste Bilddaten aufnehmen. Idealerweise nimmt die zumindest eine erste Fahrzeugkamera zum Zeitpunkt des Eintritts in den Bereich mit geänderter Helligkeit erste Bilddaten basierend auf den übermittelten geänderten Belichtungswert auf. Die Einstellung des von der zweiten Fahrzeugkamera zu der zumindest einen ersten Fahrzeugkamera übermittelten geänderten Belichtungswerts erfolgt bevorzugt automatisch.

Bei den ersten Fahrzeugkameras handelt es sich insbesondere um Kameras eines kamerabasierten Spiegelersatzsystems. Kamerabasierte Spiegelersatzsysteme weisen gegenüber herkömmlichen Seitenspiegeln eine Vielzahl an Vorteilen auf. Zum einen wird die Aerodynamik des Fahrzeugs verbessert. Kamerabasierte Spiegelersatzsysteme weisen einen niedrigeren Luftwiderstand auf. Zum anderen kann durch die kamerabasierte Spiegelersatzsysteme eine Gewichtseinsparung erzielt werden. Dies bewirkt insgesamt eine Verringerung des Spritverbrauchs.

Bevorzugt wird ein verbleibender Zeitraum bestimmt, bis das Fahrzeug, insbesondere bis die zumindest eine erste Fahrzeugkamera, voraussichtlich in den Bereich mit geänderter Helligkeit eintritt. Vorliegend wird unter verbleibender Zeitraum insbesondere ein Intervall zwischen der Aufnahme von zweiten Bilddaten mittels der zweiten Fahrzeugkamera, wobei anhand der aufgenommenen zweiten Bilddaten ein Bereich mit geänderter Helligkeit erkannt wird, und dem Eintreten der zumindest einen ersten Fahrzeugkamera in den Bereich mit geänderter Helligkeit verstanden.

Hierdurch wird insbesondere erreicht, dass exakt beim Erreichen des Bereichs mit geänderter Helligkeit die zumindest eine erste Fahrzeugkamera ein Bild bzw. Bilddaten mit dem geänderten Belichtungswert aufnimmt. Die Belichtung der zumindest einen ersten Fahrzeugkamera ist somit an die aktuell vorliegende Umgebungshelligkeit angepasst. Es wird hierdurch insbesondere eine agierende in Echtzeit erfolgende Einstellung des Belichtungswertes bzw. der Belichtungszeit der nach hinten gerichteten Fahrzeugkamera ermöglicht. Die Bilder der nach hinten gerichteten Fahrzeugkamera sind folglich zu jedem Zeitpunkt ideal belichtet.

Der verbleibende Zeitraum hängt insbesondere von dem Abstand des Fahrzeugs zum Bereich mit geänderter Helligkeit zum Zeitpunkt der Aufnahme von den zweiten Bilddaten ab, sowie davon, wie sich das Fahrzeug fortbewegt. Basierend auf der berechneten verbleibenden Zeit bzw. auf dem verbleibenden Zeitraum und einer Referenzzeit bzw. insbesondere auf einer aktuellen Uhrzeit kann ein Zeitpunkt bestimmt werden, wann das Fahrzeug voraussichtlich in den Bereich mit geänderter Helligkeit eintritt.

Bevorzugt können Bewegungswerte des Fahrzeugs ermittelt werden. Basierend auf den Bewegungswerten wird dann der verbleibende Zeitraum bestimmt, bis das Fahrzeug bzw. die zumindest eine erste Fahrzeugkamera voraussichtlich in den Bereich mit geänderter Helligkeit eintreten wird. Hierzu kann zumindest eine aktuelle Fahrgeschwindigkeit des Fahrzeugs und/oder zumindest ein aktueller Lenkeinschlag bzw. ein Lenkwinkel des Fahrzeugs herangezogen werden. Die Daten hierfür können bevorzugt mittels Fahrwerkssensoren, welche beispielsweise Daten über Gier-, Nick-, und/oder Rollbewegungen des Fahrzeugs zur Verfügung gestellt, bereitgestellt werden. Diese Art der Berechnung ist besonders effizient, da Bewegungswerte typischerweise ohnehin ermittelt und für das Verfahren gemäß der vorliegenden Erfindung ohne oder zumindest mit besonders geringem Mehraufwand genutzt werden können.

Indem in den wenigstens Fällen eine Fahrbahn hundertprozentig geradeaus verläuft, ist es vorteilhaft wenn der Verlauf der Fahrbahn bzw. der Verlauf der Fahrstrecke, die das Fahrzeug bis zum Erreichen des Bereichs mit geänderter Helligkeit durchfahren muss, erfasst werden kann. Die Erfassung der Fahrstrecke kann durch die zweite Fahrzeugkamera und entsprechenden (Bild-) Verarbeitungseinrichtungen erfolgen. Ferner ist auch der Einsatz von Spurerkennungseinrichtungen denkbar.

In einer bevorzugten Ausgestaltung kann der Bereich mit geänderter Helligkeit innerhalb mehrerer zeitlich nacheinander aufgenommener zweiter Bilddaten skaliert werden. Hierfür werden insbesondere die zweiten Bilddaten von der äußeren Umgebung des Fahrzeugs mittels der zweiten Fahrzeugkamera aufgenommen. Basierend auf dem Ergebnis dieser Skalierung über die Zeit wird dann der verbleibende Zeitraum bestimmt, bis die zumindest eine erste Fahrzeugkamera voraussichtlich in den Bereich mit geänderter Helligkeit eintreten wird.

Bevorzugt wird die erforderliche Änderung des Belichtungswertes dadurch bestimmt, dass innerhalb der zweiten Bilddaten lokale Helligkeitsunterschiede zwischen dem erkannten Bereich mit geänderter Helligkeit und den restlichen Bereichen der zweiten Bilddaten ermittelt werden.

Gemäß einem zweiten Aspekt der Erfindung wird eine Vorrichtung zur vorhersehbaren Belichtungssteuerung zumindest einer ersten Fahrzeugkamera bereitgestellt. Die Vorrichtung umfasst zumindest eine erste Fahrzeugkamera, dessen Blickfeld zur Erfassung eines seitlichen, eines seitlichen, hinteren und/oder eines hinteren Umgebungsbereich eines Fahrzeugs im Wesentlichen nach hinten gerichtet ist, zumindest eine zweite Fahrzeugkamera dessen Blickfeld zur Erfassung eines vorderen Umgebungsbereich des Fahrzeugs im Wesentlichen nach vorne gerichtet ist, und eine Bildverarbeitungseinrichtung, wobei die Vorrichtung mittels der Fahrzeugkameras und der Bildverarbeitungseinrichtung dazu eingerichtet ist, die Schritte eines Verfahrens gemäß dem ersten Aspekt der Erfindung durchzuführen.

Der Vorteil der vorliegenden Vorrichtung liegt somit insbesondere darin, dass auch bei einer Kamera, die im Wesentlichen ein Blickfeld aufweist, welches nicht in Fahrtrichtung eines Fahrzeugs, also welche nicht in die zukünftige Umgebung gerichtet ist, ein Belichtungswert, insbesondere eine Belichtungszeit bzw. eine Blendeneinstellung, erlangen kann, die mit der aktuellen Helligkeitsgegebenheit harmonisiert. Zeitliche Aussetzer der Kameras können somit verhindert werden.

Die zumindest eine erste Fahrzeugkamera ist bevorzugt im seitlichen Bereich des Fahrzeugs angeordnet. Idealerweise sind zwei erste Fahrzeugkameras vorhanden, wobei eine erste Fahrzeugkamera an der rechten Außenseite des Fahrzeugs und die zweite erste Fahrzeugkamera an der linken Außenseite des Fahrzeugs angeordnet sind. Vorteilhafterweise ist die zumindest eine erste Fahrzeugkamera im Bereich eines Seitenspiegels angeordnet. Bei der zumindest einen ersten Fahrzeugkamera, bevorzugt bei zumindest zwei ersten Fahrzeugkameras handelt es sich insbesondere um Kameras eines kamerabasierten Spiegelersatzsystems.

Es ist aber auch möglich, dass die zumindest eine erste Fahrzeugkamera an einer Rückseite des Fahrzeugs angeordnet ist. Die erste Fahrzeugkamera erfasst hierbei im Wesentlichen einen hinteren Umgebungsbereich des Fahrzeugs.

Die zweite Fahrzeugkamera kann bevorzugt im Innenraum des Fahrzeugs, insbesondere in einem Bereich hinter einer Windschutzscheibe des Fahrzeugs, angeordnet sein.

Die Fahrzeugkameras können auch Teil einer Surroundviewsystems sein.

Die erfindungsgemäße Vorrichtung eignet sich insbesondere in Fahrerassistenzsystemen.

Gemäß einem dritten Aspekt der Erfindung wird ein Fahrzeug bereitgestellt, welches eine Vorrichtung gemäß dem zweiten Aspekt der Erfindung umfasst. Bei dem Fahrzeug handelt es sich beispielsweise um ein Kraftfahrzeug, wie ein Auto, einen Bus oder einen Lastkraftwagen. Denkbar sind aber auch Zweiräder, wie Motorräder sowie Landmaschinen und ähnliches.

Gemäß einem vierten Aspekt der Erfindung wird ein Programmelement bereitgestellt, das, wenn es auf einem Prozessor ausgeführt wird, den Prozessor anleitet, die Verfahrensschritte gemäß dem ersten Aspekt der Erfindung durchzuführen, wobei insbesondere alle Verfahrensschritte durchgeführt werden, welche nach dem Bereitstellen der Fahrzeugkameras erfolgen, welche an dem Fahrzeug angeordnet sind.

Gemäß einem fünften Aspekt der Erfindung wird ein computerlesbares Medium bereitgestellt, auf dem ein Programmelement gespeichert ist, das, wenn es auf einem Prozessor ausgeführt wird, den Prozessor anleitet, die Verfahrensschritte gemäß dem ersten Aspekt der Erfindung durchzuführen, wobei insbesondere alle Verfahrensschritte durchgeführt werden, welche nach dem Bereitstellen der Fahrzeugkameras erfolgen, welche am Fahrzeug angeordnet sind.

Die Erfindung wird nun anhand der beigefügten Figuren näher erläutert.
- Figur 1: zeigt ein Flussdiagramm eines Verfahrens gemäß einer Ausführungsform der Erfindung;
- Figur 2: zeigt eine schematische Draufsicht eines Fahrzeugs gemäß einer Ausführungsform der Erfindung;
- Figur 3: zeigt eine schematische Darstellung eines Fahrzeugs gemäß einer weiteren Ausführungsform der Erfindung innerhalb einer beispielshaften Umgebung.

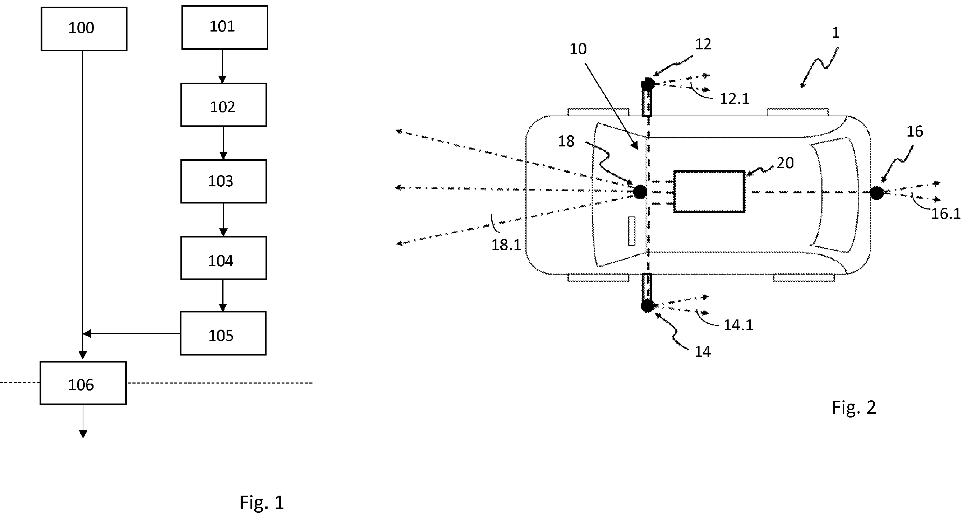

Figur 1 zeigt ein Flussdiagramm eines Verfahrens gemäß einer Ausführungsform der Erfindung. Das Verfahren dient insbesondere zur vorhersehbaren Belichtungssteuerung zumindest einer ersten Fahrzeugkamera 12, 14, 16.

In einem Schritt 100 wird zumindest eine erste Fahrzeugkamera 12, 14, 16 bereitgesellt. Das Blickfeld 12.1, 14.1, 16.1 der Fahrzeugkamera 12, 14, 16 ist im Wesentlichen nach hinten gerichtet. Hierdurch kann die zumindest eine erste Fahrzeugkamera 12, 14, 16 einen seitlichen, hinteren und/oder einen hinteren Umgebungsbereich eines Fahrzeugs 1 erfassen.

Bei der zumindest einen ersten Fahrzeugkamera 12, 14, 16 kann es sich bevorzugt um eine Kamera eines kamerabasierten Spiegelersatzsystems handeln. Mittels der zumindest einen ersten Fahrzeugkamera 12, 14, 16 lassen sich bevorzugt erste Bilddaten aufnehmen.

In einem Schritt 101 wird zumindest eine zweite Fahrzeugkamera 18 bereitgestellt. Das Blickfeld 18.1 der Fahrzeugkamera 18 ist im Wesentlichen nach vorne gerichtet. Hierdurch kann die zweite Fahrzeugkamera 18 einen äußeren vorderen Umgebungsbereich des Fahrzeugs 1 erfassen.

In einem Schritt 102 nimmt die zweite Fahrzeugkamera 18 zweite Bilddaten von dem äußeren vorderen Umgebungsbereich des Fahrzeugs 1 auf.

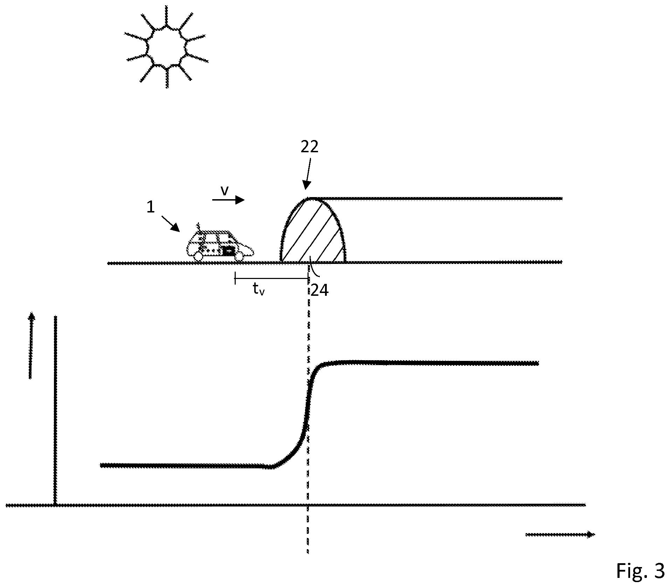

In einem Schritt 103 wird ein Bereich mit geänderter Helligkeit 24 innerhalb der zweiten Bilddaten der zweiten Fahrzeugkamera 18 erkannt. Der Bereich mit geänderter Helligkeit ist in Figur 3 durch den schraffierten Bereich 24 dargestellt.

In einem Schritt 104 wird eine erforderliche Änderung eines Belichtungswertes insbesondere basierend auf den zweiten Bilddaten bestimmt, um eine Erhellung oder Verdunklung auszugleichen, welche auftritt, wenn das Fahrzeug 1 in den Bereich mit der geänderter Helligkeit 24 eintritt. Die erforderliche Änderung des Belichtungswertes kann dadurch bestimmt werden, dass innerhalb der zweiten Bilddaten lokale Helligkeitsunterschiede zwischen dem erkannten Bereich mit geänderter Helligkeit 24 und den restlichen Bereichen der zweiten Bilddaten ermittelt werden.

In einem Schritt 105 wird der geänderte Belichtungswert an die zumindest eine erste Fahrzeugkamera 12, 14, 16 übermittelt. Durch die Übermittlung wird insbesondere erreicht, dass die zumindest eine erste Fahrzeugkamera 12, 14, 16 beim Eintritt in den Bereich mit geänderter Helligkeit 24 erste Bilddaten basierend auf den geänderten Belichtungswerten aufnehmen kann, dies erfolgt bevorzugt automatisch. Dies ist in Schritt 106 dargestellt. Die in Figur 1 dargestellte gestrichelte Linie zeigt den Eintritt in den Bereich mit geänderter Helligkeit 24.

Der Vorteil des vorliegenden Verfahrens liegt somit insbesondere darin, dass auch bei einer Fahrzeugkamera 12 ,14 ,16, die im Wesentlichen ein Blickfeld 12.1, 14.1, 16.1 aufweist, welches nicht in Fahrtrichtung des Fahrzeugs 1 gerichtet ist, ein Belichtungswert erhältlich ist, der mit der aktuellen bzw. eintretenden Helligkeitsgegebenheit harmonisiert.

Figur 2 zeigt eine schematische Draufsicht eines Fahrzeugs 1 mit einer Vorrichtung 10 gemäß einer Ausführungsform der Erfindung. Die Vorrichtung 10 dient insbesondere zur vorhersehbaren Belichtungssteuerung zumindest einer ersten Fahrzeugkamera 12, 14, 16.

Die Vorrichtung 10 umfasst dabei zumindest eine erste Fahrzeugkamera 12, 14, 16, wobei jeweils das Blickfeld 12.1, 14.1, 16.1 der zumindest einen ersten Fahrzeugkamera 12, 14, 16 im Wesentlichen nach hinten gerichtet ist. Eine erste und eine zweite erste Fahrzeugkamera 12 und 14 erfassen einen seitlichen, hinteren Umgebungsbereich des Fahrzeugs 1 und eine dritte erste Fahrzeugkamera 16 erfasst einen hinteren Umgebungsbereich des Fahrzeugs 1.

Bevorzugt ist die zumindest eine erste Fahrzeugkamera 12, 14 im seitlichen Bereich des Fahrzeugs 1 angeordnet, wobei eine erste Fahrzeugkameras 12 an der rechten Außenseite des Fahrzeugs 1 und eine zweite erste Fahrzeugkamera 14 an der linken Außenseite des Fahrzeugs 1 angeordnet sind. Bei den zumindest zwei ersten Fahrzeugkameras 12, 14 handelt es sich insbesondere um Kameras eines kamerabasierten Spiegelersatzsystems.

Die dritte erste Kamera 16 ist bevorzugt an einer Rückseite des Fahrzeugs 1 angeordnet.

Ferner umfasst die Vorrichtung 10 zumindest eine zweite Fahrzeugkamera 18. Das Blickfeld 18.1 ist im Wesentlichen nach vorne gerichtet. Hierdurch erfasst die zweite Fahrzeugkamera 18 einen vorderen Umgebungsbereich des Fahrzeugs 10. Die zweite Fahrzeugkamera 18 kann bevorzugt in einem Innenraum des Fahrzeugs 1, insbesondere in einem Bereich hinter einer Windschutzscheibe des Fahrzeugs 1, angeordnet sein.

Des Weiteren umfasst die Vorrichtung 10 eine Bildverarbeitungseinrichtung 20. Die Bildverarbeitungseinrichtung 20 kann dabei bevorzugt software-implementiert sein. Denkbar ist, dass eine software-implementierte Bildverarbeitungseinrichtung 20 auf einer Speichereinheit von einer der Fahrzeugkameras hinterlegt ist.

Die Vorrichtung 10 ist dazu eingerichtet, den Bereich mit geänderter Helligkeit 24 innerhalb der zweiten Bilddaten zu erkennen, z. B. durch bekannte Methoden welche von der Bildverarbeitungseinrichtung 20 angewandt werden können.

Figur 3 zeigt eine schematische Darstellung eines Fahrzeugs 1 gemäß einer weiteren Ausführungsform der Erfindung innerhalb einer beispielshaften Umgebung, wobei es sich insbesondere um eine Tageszeit mit hohem Sonnenstand handelt. Das Fahrzeug 1 bewegt sich in Richtung eines Tunnels 22. Der Tunnel 22 stellt insbesondere einen Bereich mit geänderter Helligkeit 24 dar. Mit Einfahrt in den Tunnel 22 bzw. mit einem späteren Herausfahren aus dem Tunnel 24 widerfährt das Fahrzeug 1 jeweils einen Übergang von einer hellen zu einer dunklen Umgebung bzw. umgekehrt.

Das Fahrzeug 1 fährt beispielsweise mit einer Geschwindigkeit v. Die Geschwindigkeit v kann dabei in bekannter Art und Weise ermittelt werden. Mittels bekannter Bildverarbeitungsmethoden kann beispielsweise die Bildverarbeitungseinrichtung 20 eine Distanz bzw. einen Abstand berechnen, um welche bzw. um welchen der Tunnel 22 momentan von dem Fahrzeug 1 beabstandet ist. Basierend auf der Distanz bzw. dem Abstand und/oder der Bewegung des Fahrzeugs 1, insbesondere der Richtung und der Geschwindigkeit des Fahrzeugs 1, kann ein verbleibender Zeitraum tᵥ berechnet werden, bis das Fahrzeug voraussichtlich in den Tunnel 22 bzw. in den Bereich mit geänderter Helligkeit 24 eintritt.

Ist eine aktuelle Uhrzeit oder eine Referenzzeit bekannt, kann basierend hierauf und auf dem berechneten verbleibender Zeitraum tᵥ der Zeitpunkt ermittelt werden, zudem das Fahrzeug 1 bzw. die zumindest eine erste Kamera 12, 14, 16 in den Tunnel 22 bzw. den Bereich mit geänderter Helligkeit eintritt. Alternativ kann der Zeitpunkt, zudem das Fahrzeug in den Tunnel 22 bzw. den Bereich mit geänderter Helligkeit 24 eintritt, basierend auf einer Skalierung des Bereichs mit geänderter Helligkeit 24 über die Zeit erfolgen. Dabei kann der erkannte Bereich mit geänderter Helligkeit 24 bzw. der Tunnel 22 innerhalb mehrerer zeitlich nacheinander aufgenommenen zweiter Bilddaten skaliert werden, wobei die zweiten Bilddaten mittels der zweiten Fahrzeugkamera 18 von der äußeren Umgebung des Fahrzeugs 1 aufgenommen werden. Basierend auf dem Ergebnis dieser Skalierung über die Zeit kann dann der verbleibende Zeitraum tᵥ bestimmt werden, bis die zumindest eine erste Kamera 12, 14, 16 voraussichtlich in den Bereich mit geänderter Helligkeit 24 eintreten wird.

Mittels einer Skalierung bzw. auch generell, insbesondere bei langsamen Fahrzeuggeschwindigkeiten, bei denen der Übergang von einer hellen zu einer dunklen Umgebung bzw. umgekehrt nicht abrupt erfolgt, sondern einen Übergangzeitraum beschreibt, kann der Übergang der/ des geänderten Belichtungswerte/s als Funktion erfolgen bzw. das Übermitteln der/des geänderten Belichtungswerte/s an die zumindest eine erste Fahrzeugkamera 12, 14, 16 als zeitlich folgende Sequenz erfolgen. Sie beschreibt somit insbesondere einen kontinuierlichen Übergang.

Das in Figur 3 unten gezeigte System zeigt die Belichtungszeit (Ordinate) der zumindest einen ersten Fahrzeugkamera 12, 14, 16 über die Zeit (Abszisse). Zu erkennen ist, dass die Belichtungszeit der zumindest einen ersten Fahrzeugkamera 12, 14, 16 in einer agierenden Weise der Situation angepasst wird. Mit Einfahrt in den Tunnel 22, welches einen Übergang in eine dunklere Umgebung zur Folge hat, wird die Belichtungszeit der zumindest einen ersten Fahrzeugkamera 12, 14, 16 unmittelbar erhöht.

## Patentansprüche

1. Verfahren zur vorhersehbaren Belichtungssteuerung zumindest einer ersten Fahrzeugkamera (12, 14, 16) umfassend die Schritte:
- Bereitstellen zumindest einer ersten Fahrzeugkamera (12, 14, 16), dessen Blickfeld (12.1, 14.1, 16.1) zur Erfassung eines seitlichen, eines seitlichen, hinteren und/oder eines hinteren Umgebungsbereich eines Fahrzeugs (1) im Wesentlichen zur Seite oder nach hinten gerichtet ist,
- Bereitstellen zumindest einer zweiten Fahrzeugkamera (18), dessen Blickfeld (18.1) zur Erfassung eines äußeren vorderen Umgebungsbereich des Fahrzeugs (1) im Wesentlichen nach vorne gerichtet ist,
- Aufnehmen von zweiten Bilddaten von der äußeren vorderen Umgebung des Fahrzeugs (1) mittels der zweiten Fahrzeugkamera (18),
- Erkennen eines Bereichs mit geänderter Helligkeit (24) innerhalb der zweiten Bilddaten der zweiten Fahrzeugkamera (18),
- Bestimmen einer erforderlichen Änderung eines Belichtungswertes basierend auf den zweiten Bilddaten, um eine Erhellung oder Verdunklung auszugleichen, welche auftritt, wenn das Fahrzeug (1) in den Bereich mit der geänderter Helligkeit (24) eintritt,
- Übermitteln des geänderten Belichtungswertes an die zumindest eine erste Fahrzeugkamera (12, 14, 16), so dass beim Eintritt in den Bereich mit geänderter Helligkeit (24) die zumindest eine erste Fahrzeugkamera (12, 14, 16) erste Bilddaten basierend auf den geänderten Belichtungswerten aufnehmen kann, wobei
ein Bestimmen eines verbleibenden Zeitraums (tᵥ) erfolgt, bis das Fahrzeug (1), voraussichtlich in den Bereich mit geänderter Helligkeit (24) eintreten wird und Bewegungswerte des Fahrzeugs (1) ermittelt werden, und basierend auf den Bewegungswerten der verbleibende Zeitraum (tᵥ) bestimmt wird, bis das Fahrzeug (1) voraussichtlich in den Bereich mit geänderter Helligkeit (24) eintreten wird.

2. Verfahren nach Anspruch 1, wobei
als verbleibender Zeitraum (tᵥ), der Zeitraum (tᵥ) gewählt wird, bis die zumindest eine erste Fahrzeugkamera (12, 14, 16) voraussichtlich in den Bereich mit geänderter Helligkeit (24) eintreten wird.

3. Verfahren nach Anspruch 2, wobei
basierend auf den Bewegungswerten der verbleibende Zeitraum (tᵥ) bestimmt wird, bis die zumindest eine erste Fahrzeugkamera (12, 14, 16) voraussichtlich in den Bereich mit geänderter Helligkeit (24) eintreten wird.

4. Verfahren nach einem der vorangehenden Ansprüche, wobei der
Bereich mit geänderter Helligkeit (24) innerhalb mehrerer zeitlich nacheinander aufgenommenen zweiter Bilddaten skaliert wird, wobei die zweiten Bilddaten mittels der zweiten Fahrzeugkamera (18) von der äußeren Umgebung des Fahrzeugs (1) aufgenommen werden, und basierend auf dem Ergebnis dieser Skalierung über die Zeit der verbleibende Zeitraum (tᵥ) bestimmt wird, bis das Fahrzeug (1), insbesondere bis die zumindest eine erste Kamera (12, 14, 16) voraussichtlich in den Bereich mit geänderter Helligkeit (24) eintreten wird.

5. Verfahren nach einem der vorangehenden Ansprüche, wobei
die erforderliche Änderung des Belichtungswertes bestimmt wird, indem innerhalb der zweiten Bilddaten lokale Helligkeitsunterschiede zwischen dem erkannten Bereich mit geänderter Helligkeit (24) und den restlichen Bereichen der zweiten Bilddaten ermittelt werden.

6. Vorrichtung (10) zur vorhersehbaren Belichtungssteuerung zumindest einer ersten Fahrzeugkamera (12, 14, 16) umfassend zumindest eine erste Fahrzeugkamera (12, 14, 16), dessen Blickfeld (12.1, 14.1, 16.1) zur Erfassung eines seitlichen, eines seitlichen, hinteren und/oder eines hinteren Umgebungsbereich eines Fahrzeugs (1) im Wesentlichen zur Seite und/oder nach hinten gerichtet ist, zumindest eine zweite Fahrzeugkamera (18) dessen Blickfeld (18.1) zur Erfassung eines vorderen Umgebungsbereich des Fahrzeugs (1) im Wesentlichen nach vorne gerichtet ist, und eine Bildverarbeitungseinrichtung (20), wobei die Vorrichtung (10) mittels der Fahrzeugkameras (12, 14, 16, 18) und der Bildverarbeitungseinrichtung (20) dazu eingerichtet ist, die Schritte eines Verfahrens gemäß einem der vorangehenden Ansprüche durchzuführen.

7. Vorrichtung (10) nach Anspruch 6, wobei
es sich bei der zumindest einen ersten Fahrzeugkamera (12, 14, 16) um eine Kamera eines kamerabasierten Spiegelersatzsystems handelt.

8. Fahrzeug (1) umfassend eine Vorrichtung (10) nach einem der Ansprüche 6 oder 7.

9. Programmelement, das, wenn es auf einem Prozessor ausgeführt wird, den Prozessor anleitet, die Verfahrensschritte gemäß einem der Ansprüche 1 bis 5 durchzuführen.

10. Computerlesbares Medium, auf dem ein Programmelement gespeichert ist, das, wenn es auf einem Prozessor ausgeführt wird, den Prozessor anleitet, die Verfahrensschritte gemäß einem der Ansprüche 1 bis 5 durchzuführen.

## Claims

1. Method for predictable exposure control of at least one first vehicle camera (12, 14, 16), comprising the steps of:
- providing at least one first vehicle camera (12, 14, 16), whose field of view (12.1, 14.1, 16.1) is directed substantially to the side or to the rear for capturing a lateral, a lateral rear and/or a rear surrounding region of a vehicle (1),
- providing at least one second vehicle camera (18), whose field of view (18.1) is directed substantially to the front for capturing an outer front surrounding region of the vehicle (1),
- recording second image data of the outer front surroundings of the vehicle (1) by means of the second vehicle camera (18),
- detecting a region with a changed brightness (24) within the second image data of the second vehicle camera (18),
- determining a necessary change in an exposure value based on the second image data to compensate for any brightening or darkening that occurs when the vehicle (1) enters the region with the changed brightness (24),
- transmitting the changed exposure value to the at least one first vehicle camera (12, 14, 16) so that the at least one first vehicle camera (12, 14, 16) can record first image data based on the changed exposure values when the region with the changed brightness (24) is entered, wherein
a remaining time period (tᵥ) until the vehicle (1) is predicted to enter the region with the changed brightness (24) is determined and movement values of the vehicle (1) are ascertained, and the remaining time period (tᵥ) until the vehicle (1) is predicted to enter the region with the changed brightness (24) is determined on the basis of the movement values.

2. Method according to Claim 1, wherein the time period (tᵥ) until the at least one first vehicle camera (12, 14, 16) is predicted to enter the region with the changed brightness (24) is selected as the remaining time period (tᵥ).

3. Method according to Claim 2, wherein the remaining time period (tᵥ) until the at least one first vehicle camera (12, 14, 16) is predicted to enter the region with the changed brightness (24) is determined based on the movement values.

4. Method according to any of the preceding claims, wherein the region with the changed brightness (24) is scaled within a plurality of temporally successively recorded second image data, wherein the second image data of the outer surroundings of the vehicle (1) are recorded by means of the second vehicle camera (18) and the remaining time period (tᵥ) until the vehicle (1), in particular until the at least one first camera (12, 14, 16) is predicted to enter the region with the changed brightness (24) is determined on the basis of the result of said scaling over time.

5. Method according to any of the preceding claims, wherein the required change in the exposure value is determined by ascertaining within the second image data local brightness differences between the detected region with the changed brightness (24) and the remaining regions of the second image data.

6. Apparatus (10) for predicted exposure control of at least one first vehicle camera (12, 14, 16), comprising at least one first vehicle camera (12, 14, 16), whose field of view (12.1, 14.1, 16.1) is directed substantially to the side and/or to the rear for capturing a lateral, a lateral rear and/or a rear surrounding region of a vehicle (1), at least one second vehicle camera (18), whose field of view (18.1) is directed substantially to the front for capturing a front surrounding region of the vehicle (1), and an image processing device (20), wherein the apparatus (10) is configured by means of the vehicle cameras (12, 14, 16, 18) and the image processing device (20) to carry out the steps of a method according to any of the preceding claims.

7. Apparatus (10) according to Claim 6, wherein the at least one first vehicle camera (12, 14, 16) is a camera of a camera-based mirror replacement system.

8. Vehicle (1) comprising an apparatus (10) according to either of Claims 6 and 7.

9. Program element which, when it is executed on a processor, instructs the processor to carry out the method steps according to any of Claims 1 to 5.

10. Computer-readable medium, on which a program element is stored which, when it is executed on a processor, instructs the processor to carry out the method steps according to any of Claims 1 to 5.

## Revendications

1. Procédé de commande d'exposition prévisible d'au moins une première caméra de véhicule (12, 14, 16), comprenant les étapes consistant à :
- fournir au moins une première caméra de véhicule (12, 14, 16) dont le champ de vision (12.1, 14.1, 16.1) est orienté substantiellement vers le côté ou vers l'arrière pour la détection d'une zone environnante latérale, latérale arrière et/ou arrière d'un véhicule (1),
- fournir au moins une deuxième caméra de véhicule (18) dont le champ de vision (18.1) est orienté substantiellement vers l'avant pour la détection d'une zone environnante avant extérieure du véhicule (1),
- enregistrer des deuxièmes données de l'environnement avant extérieur du véhicule (1) au moyen de la deuxième caméra de véhicule (18),
- identifier une zone ayant une luminosité modifiée (24) parmi des deuxièmes données d'image de la deuxième caméra de véhicule (18),
- déterminer une modification nécessaire d'une valeur d'exposition sur la base des deuxièmes données d'image afin de compenser un éclaircissement ou un obscurcissement qui se produit quand le véhicule (1) entre dans la zone ayant la luminosité modifiée (24),
- transmettre la valeur d'exposition modifiée à ladite au moins une première caméra de véhicule (12, 14, 16) de sorte qu'à l'entrée dans la zone ayant une luminosité modifiée (24), ladite au moins une première caméra de véhicule (12, 14, 16) peut enregistrer des premières données d'image sur la base des valeurs d'exposition modifiées, dans lequel
une détermination d'une période restante (tᵥ) jusqu'à ce que le véhicule (1) entre probablement dans la zone ayant une luminosité modifiée (24) est effectuée, et des valeurs de déplacement du véhicule (1) sont établies, et sur la base des valeurs de déplacement, la période restante (tᵥ) jusqu'à ce que le véhicule (1) entre probablement dans la zone ayant une luminosité modifiée (24) est déterminée.

2. Procédé selon la revendication 1, dans lequel on choisit comme période restante (tᵥ) la période (tᵥ) jusqu'à ce que ladite au moins une première caméra de véhicule (12, 14, 16) entre probablement dans la zone ayant une luminosité modifiée (24).

3. Procédé selon la revendication 2, dans lequel, sur la base des valeurs de déplacement, la période restante (tᵥ) jusqu'à ce que ladite au moins une première caméra de véhicule (12, 14, 16) entre probablement dans la zone ayant une luminosité modifiée (24) est déterminée.

4. Procédé selon l'une quelconque des revendications précédentes, dans lequel la zone ayant une luminosité modifiée (24) est mise à l'échelle à l'intérieur de plusieurs deuxièmes données d'image enregistrées successivement dans le temps, les deuxièmes données d'image de l'environnement extérieur du véhicule (1) étant enregistrées au moyen de la deuxième caméra de véhicule (18), et sur la base du résultat de cette mise à l'échelle dans le temps, la période restante (tᵥ) jusqu'à ce que le véhicule (1), en particulier jusqu'à ce que ladite au moins une première caméra (12, 14, 16), entre probablement dans la zone ayant une luminosité modifiée (24) est déterminée.

5. Procédé selon l'une quelconque des revendications précédentes, dans lequel la modification nécessaire de la valeur d'exposition est déterminée en ce que parmi des deuxièmes données d'image, des différences de luminosité locales entre la zone ayant une luminosité modifiée (24) identifiée et les zones restantes des deuxièmes données d'image sont établies.

6. Dispositif (10) de commande d'exposition prévisible d'au moins une première caméra de véhicule (12, 14, 16), comprenant au moins une première caméra de véhicule (12, 14, 16) dont le champ de vision (12.1, 14.1, 16.1) est orienté substantiellement vers le côté et/ou vers l'arrière pour détecter une zone environnante latérale, latérale arrière et/ou arrière d'un véhicule (1), au moins une deuxième caméra de véhicule (18) dont le champ de vision (18.1) est orienté substantiellement vers l'avant pour détecter une zone environnante avant du véhicule (1), et un équipement de traitement d'image (20), le dispositif (10) étant conçu au moyen des caméras de véhicule (12, 14, 16, 18) et de l'équipement de traitement d'image (20) pour exécuter les étapes d'un procédé selon l'une quelconque des revendications précédentes.

7. Dispositif (10) selon la revendication 6, dans lequel ladite au moins une première caméra de véhicule (12, 14, 16) est une caméra d'un système de remplacement de rétroviseur à base de caméra.

8. Véhicule (1), comprenant un dispositif (10) selon l'une quelconque des revendications 6 ou 7.

9. Elément de programme qui, lorsqu'il est exécuté sur un processeur, ordonne au processeur d'exécuter les étapes de procédé selon l'une quelconque des revendications 1 à 5.

10. Support lisible par ordinateur sur lequel est stocké un élément de programme qui, lorsqu'il est exécuté sur un processeur, ordonne au processeur d'exécuter les étapes de procédé selon l'une quelconque des revendications 1 à 5.
